# EUROPEAN PATENT APPLICATION

(11) **EP 2 811 443 A1**
(43) Date of publication of application: **10.12.2014**
(21) Application number: 14170670.5
(22) Date of filing: 30.05.2014
(51) Int. Cl.: G06Q 10/10

(54) **Apparatus and method for processing data in energy management system**

(30) Priority: 03.06.2013 KR 20130063612
(71) Applicant: LSIS Co., Ltd., Dongan-gu, Anyang-si Gyeonggi-do 431-080 (KR)
(72) Inventor: Lee, Seung Ju, Anyang-si, Gyeonggi-do 431-080 (KR)
(74) Representative: Lang, Johannes

(57) **Abstract**

Provided data processing apparatus The apparatus includes a user input unit generating a user input signal for generating and editing a note corresponding to data collected in a long-distance control system, a control unit generating the note corresponding to the data, synchronizing the generated note with one of the corresponding data a screen outputting the data, receiving an importance level of the generated note, and determining whether to activate the note according to the importance level, a storage unit storing the generated note, and a display unit displaying a graphic screen including the data and the note corresponding to the data.

## Description

### BACKGROUND

The present disclosure relates to an energy management system, and more particularly, to an apparatus and a method for processing data in an energy management system

Respective power systems are connected to an energy management system (EMS) through a communication network. Accordingly, a load dispatcher administrating the EMS may execute commands for checking and controlling data on a console screen for managing the EMS in real time. When an alarm is set off, a follow-up with respect to the alarm is performed.

All operations of a load dispatcher in a general EMS are performed through input devices such as a keyboard and a mouse. To execute a control command through an apparatus, the load dispatcher drives a control screen execution program on a management console through operating a keyboard and a mouse

A user interface screen is operated find control, a desired control command of the load dispatcher is selected by operating the mouse, and then a control command corresponding to a keyboard input may be executed.

Herein, when a desired screen or a management screen is called and checked, since only items and contents for basic data are included, it is difficult for a user to recognize detailed items according to an user input or items necessary for taking over.

### SUMMARY

Embodiments provide an apparatus and a method for processing data for user inputs and notes according thereto with respect to data of an apparatus to be monitored and managed by an energy management system.

Embodiments also provide an effect of easily and efficiently managing data for user inputs and note generating data according thereto with respect to data of an apparatus to be monitored and managed by an energy management system.

In one embodiment, a data processing apparatus includes a user input unit generating a user input signal for generating and editing a note corresponding to data collected in a long-distance control system, a control unit generating the note corresponding to the data, synchronizing the generated note with one of the corresponding data a screen outputting the data, receiving an importance level of the generated note and determining whether to activate the note according to the importance level, a storage unit storing the generated note, and a display unit displaying a graphic screen including the data and the note corresponding to the data.

### BRIEF DESCRIPTION OF THE DRAWINGS

FIG. 1 is a block diagram of an energy management system according to an exemplary embodiment;
FIG. 2 is a flowchart illustrating note management operations according to an exemplary embodiment; and
FIG. 3 is a view of an example of a note providing screen including a note list generated according to an exemplary embodiment.

### DETAILED DESCRIPTION OF THE EMBODIMENTS

Terms and words used in the present disclosure and claims will not be understood being limited to general or lexical meanings. In an aspect that the inventor may properly define the concept of the terms in order to describe embodiments in the best way, the terms will be understood as meanings and concepts appropriate to the technical thoughts of the embodiments

Accordingly, the embodiments disclosed in the specification and configurations illustrated in the drawings are just exemplary embodiments, which do not represent the whole technical thoughts of the present embodiments. It should be understood various equivalents replaceable therefor and modified examples thereof may exists at the point in time of the present application.

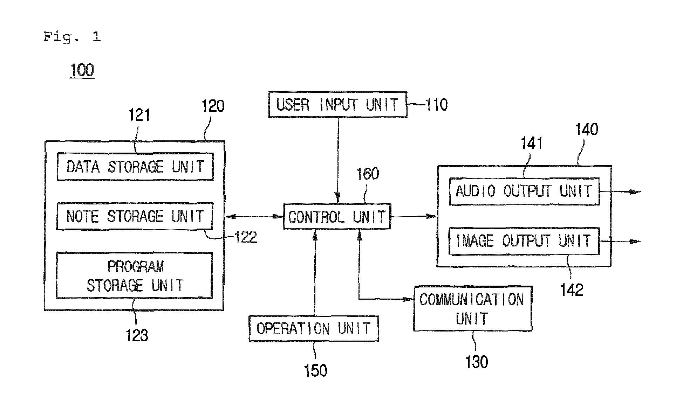

FIG. 1 is a block diagram of an energy management system (EMS) 100 according to an exemplary embodiment.

Referring to FIG. 1, the EMS 100 includes a user input unit 110, a storage unit 120, a communication unit 130, an output unit 140, an operation unit 150, and a control unit 160.

The user input unit 110 generates input data for controlling operations of the EMS 100. The user input unit 110 may include a keypad, a dome switch, a touch pad, a jog-wheel, and a jog-switch. The user input unit 110 may generate control signals for generating, editing, and deleting a note corresponding to data to be processed by the EMS 100 and input signals corresponding thereto.

The storage unit 120 may store a program for operations of the control unit 160 and may temporarily or permanently store input/output data. The storage unit 120 may include a data storage unit 121, a note storage unit 122, and a program storage unit 123.

The data storage unit 121 may store control signal data corresponding to a result of processing a user input signal inputted through the operation unit 150.

The note storage unit 122 may store a note recording a data list or a text and an image inputted through the user input unit on a graphic page. The note storage unit 122 may be synchronized with data or a graphic page with respect to a generated note, thereby storing the note including synchronized information.

The program storage unit 123 may store the program for operations of the control unit 160.

The communication unit 130 may receive data with respect to a load dispatcher and user data inputted through the EMS 100. Also, a control signal processed by the EMS 100 and a processing result may be transmitted to a preset destination and a corresponding device.

The output unit 140 for generating visual auditory, or tactile outputs may include an audio output unit 141 and an image output unit, that is, a display unit 142.

The audio output unit 141 may output audios with respect to alarms or alerts for data processed by the EMS 100 The audio output unit 141 may include a receiver, a speaker, and a buzzer.

The image output unit 142 displays or outputs information processed by the EMS 100. The image output unit 142 may be present as a plurality thereof if necessary. Also, when the image output unit 142 and a sensor for sensing touches (hereinafter, referred to as a touch sensor) form a mutually layered structure (hereinafter, referred to as a touch screen), the image output unit 142 may be used as an input device in addition to an output device. Particularly, the image output unit 142 may display a note list generated corresponding to data or independently generated according to a user input. Also, a screen for at least one note selected from the displayed note list according to the user input may be displayed

The operation unit 150, for example, may be a user input unit and may receive a control command to control the operation of the EMS 100 through the operation unit or to execute editing and an update for inputted data.

The control unit 160 generally controls overall operations of the EMS 100. The control unit 160 may generate control signals for generating, deleting, and editing notes corresponding to data and graphic pages collected and stored in the EMS 100. Also, with respect to a note generated according to a user input, data and graphic pages corresponding to the note may be synchronized.

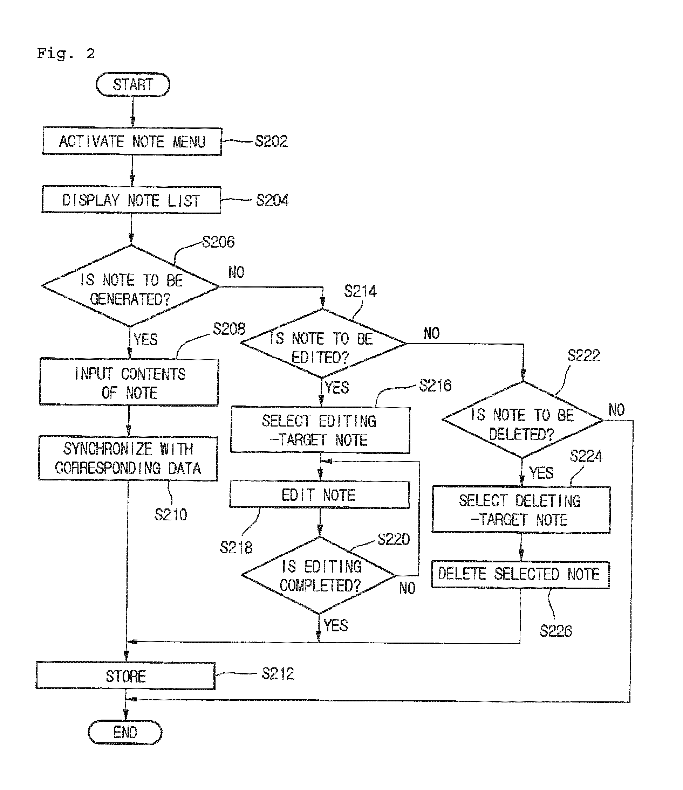

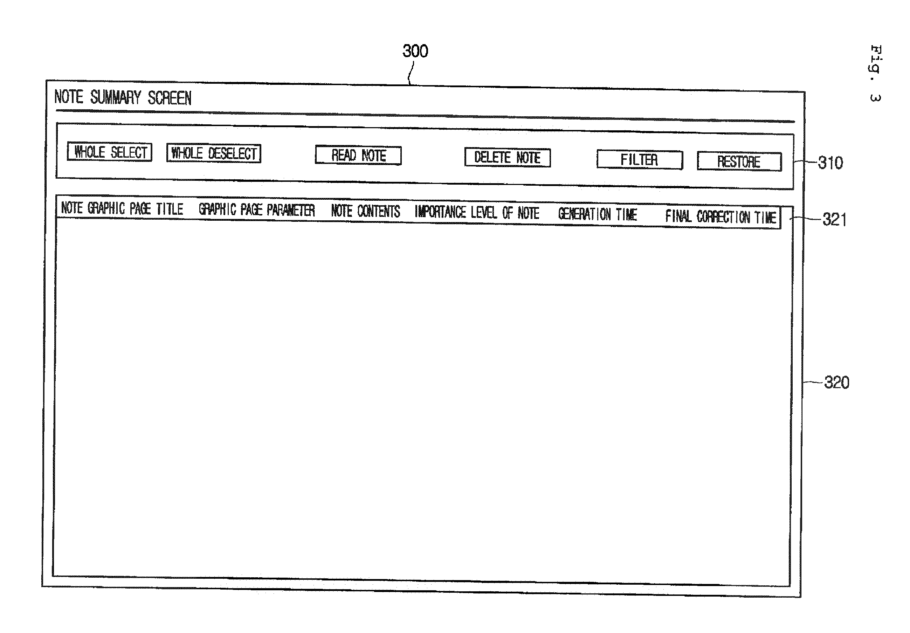

Operations of generating and editing a note corresponding to data and a graphic page according to a configuration of the EMS 100 as described above will be described in detail with reference to FIGS. 2 and 3.

FIG. 2 is a flowchart illustrating note management operations according to an exemplary embodiment. FIG. 3 is a view of an example of a note providing screen including a note list generated according to an exemplary embodiment.

Referring to FIGS. 2 and 3, the control unit 150 may activate a note menu in the EMS 100 according to a user input (S202).

The control unit 150 may display at least one stored note list or summary list according to the activation of the note menu. That is, when the note menu is activated as the screen shown in FIG. 3, at least one a note list or not summary list 300 corresponding to data or a graphic screen, stored in the note storage unit 122, may be displayed (S204).

The control unit 150 may determine whether a note-added menu is received while displaying the note list or on the graphic screen (S206).

The control unit 150 may generate a note on the activated graphic screen when sensing a note generation menu input. Note contents may be inputted to the generated note through the user input unit 110 (S208).

The control unit 150 may synchronize the inputted note with the corresponding graphic screen (S210).

The control unit 150 may store information of the synchronized note such as a note level, a font, the synchronized graphic screen and data in the note storage unit 122 (S122).

On the other hand, the control unit 150 may determine whether an input of a note editing menu of the note list is sensed (S214).

When the note editing menu is inputted, the control unit 150 may receive an editing-target note selected from the note list or may read a previously stored note item from the note storage unit 122 (S216).

The control unit 150 may receive a user input for editing contents corresponding to the selected or read note item (S218).

The control unit 150 may determine whether the editing is completed (S220) and may store edited contents of the note (S212).

Also, the control unit 150 may determine whether an input of a note deleting menu of the note list is sensed (S222).

When the note deleting menu is inputted, the control unit 150 may select or read a note to be deleted (S224) and may delete a corresponding note (S226). For example, on a graphic screen, when a note synchronized with the corresponding graphic screen is selected or a deletion request menu corresponding to the note is inputted, the note is allowed to be deleted. The deletion of the note may be a deletion of synchronization information of the selected note synchronized with the graphic screen or a deletion of the note. Also, information on the note deleted according to the deletion request signal may be separately stored in the storage unit 120. Also, it is possible to set a concealment function of concealing a previously stored note synchronized with the graphic screen from the graphic screen or the note list. The concealment function may be defined as a state, in which the note is inactivated only on the graphic screen while not being deleted.

Also, the control unit 150 may set a note level of a stored note or a generated note on the graphic screen or the note list through the user input unit 110. The note level may allow a note to be concealed or inactivated according to a preset level of the note when the graphic screen is activated

Also, as shown in FIG. 3, the note list 30 may be displayed while being divided into a note editing menu window 310 and a note item display unit 320.

The note editing menu window 31 may include menu buttons for executing selection and deselection for a displayed note item 321 and deletion and reading for a note. Also, at least one menu for editing or displaying a note item, for example, filtering menus for restoring or displaying a deleted note item may be included and displayed.

Also, the note item display unit 320 may display at least one note stored in the note storage unit 122 and added to the graphic screen. The note item display unit 320 may display information on an identifier and a synchronized graphic screen of a note and information on brief contents, an importance level, a generation time, and a correction time of the note

In the embodiment, it has been described a control apparatus of the EMS 100 includes the storage unit 120 and the note storage unit 122 as components for storing a note synchronized with a graphic screen or data.

However, as the component for storing the notes, instead of the control apparatus of the EMS 100, a long-distance note server may be formed to store note data stored in the note storage unit 122.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A data processing apparatus comprising:
a user input unit(110) generating a user input signal for generating and editing a note corresponding to data collected in a long-distance control system;
a control unit(160) generating the note corresponding to the data, synchronizing the generated note with one of the corresponding data a screen outputting the data, receiving an importance level of the generated note, and determining whether to activate the note according to the importance level;
a storage unit(120) storing the generated note; and
a display unit(142) displaying a graphic screen including the data and the note corresponding to the data.

2. The apparatus of claim 1, wherein when a deletion request signal with respect to a note previously stored in the storage unit (120) is sensed, the control unit(160) deletes the note and stores information on the deleted note

3. The apparatus of claim 2, wherein the control unit (160) deletes synchronization information of the not synchronized with the graphic screen when the note is deleted

4. The apparatus of claim 1, further comprising a communication unit(130) transmitting the note to a preset long-distance place.

5. The apparatus of claim 1, wherein the storage unit (120) stores a note comprising one of a data list and a text and an image inputted through the user input unit(110) on a graphic page.

6. The apparatus of claim 5, wherein the storage unit(120) is synchronized with one of the data and the graphic page with respect to the generated note and comprises the synchronization information.

7. The apparatus of claim 6, wherein the synchronization information is information on the note synchronized with one of the data and the graphic screen, and
wherein the information on the note comprises information on a level and font of the note.

8. The apparatus of claim 1, wherein when a note menu is activated, the control unit(160) displays a note list corresponding to one of the data and the graphic screen stored in the storage unit(120).

9. The apparatus of claim 1, wherein when a concealment function is set with respect to the generated note, the control unit(160) displays the graphic screen while the note is inactivated on the graphic screen.

10. The apparatus of claim 9, wherein when the note is inactivated, the control unit(160) displays an icon indicating the presence of the note on the graphic screen.

11. The apparatus of claim 9, wherein the control unit sets a display state of the note according to the level of the note.

12. The apparatus of claim 1, wherein when the note list is displayed, the control unit(160) displays a note editing menu screen and a note item display screen to be separate from each other.

13. The apparatus of claim 12, wherein when the note item is displayed, the control unit(160) displays at least one selected from an identifier of the note, information on synchronized graphic screen, the level of the note, and a generation time.
